(19)

Europäisches Patentamt

European Patent Office

Office européen des brevets

(11) **EP 4 170 157 A1**

(12) **EUROPEAN PATENT APPLICATION**

(43) Date of publication:
26.04.2023 Bulletin 2023/17

(21) Application number: 22177253.6

(22) Date of filing: 03.06.2022

(51) International Patent Classification (IPC):
*F03D 7/04* (2006.01)    *F03D 17/00* (2016.01)

(52) Cooperative Patent Classification (CPC):
**F03D 17/00; F03D 7/045; F03D 7/046;**
F05B 2260/80; F05B 2260/821; F05B 2260/84;
F05B 2270/404

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 22.10.2021 IN 202121048213

(71) Applicant: **General Electric Renovables España
S.L.**
**08005 Barcelona (ES)**

(72) Inventors:
• **Shah, Tapan Ravin**
**Schenectady, NY, 12345 (US)**
• **Virani, Nurali**
**Schenectady, NY, 12345 (US)**

• **Srivastav, Abhishek**
**Schenectady, NY, 12345 (US)**
• **Bollapragada, Rajesh Kartik**
**Schenectady, NY, 12345 (US)**
• **Appuraj, Karthikeyan**
**560066 Bangalore (IN)**
• **Subramanian, Arunvenkataraman**
**Schenectady, NY, 12345 (US)**
• **Jobin, James**
**Schenectady, NY, 12345 (US)**
• **Madugula, Venkataramana**
**560066 Bangalore (IN)**
• **LaFleche, John Edmund**
**Schenectady, NY, 12345 (US)**
• **Mazumdar, Abhijeet**
**560066 Bangalore (IN)**

(74) Representative: **Zimmermann & Partner
Patentanwälte mbB
Postfach 330 920
80069 München (DE)**

(54) **SYSTEM AND METHOD FOR LEARNING-BASED PREDICTIVE FAULT DETECTION AND AVOIDANCE FOR WIND TURBINES**

(57)    A method predicting and avoiding faults that result in a shutdown of a wind turbine includes receiving operational data of the wind turbine. The method also includes predicting, via a predictive model, current or future behavior of the wind turbine using the operational data. Further, the method includes determining, via a fault detection model, whether the current or future behavior indicates an upcoming short- or long-term fault occurring in the wind turbine. Moreover, the method includes determining, via a prescriptive action model, a corrective action for the wind turbine based on whether the future behavior of the wind turbine indicates the upcoming short- or long-term fault occurring in the wind turbine. Thus, the method also includes implementing the corrective action during operation to prevent the upcoming short- or long-term fault from occurring.

EP 4 170 157 A1

**(Cont. next page)**

FIG. 1

**Description**

FIELD

The present disclosure generally relates to wind turbine control systems, and more particularly, to a system and method for learning-based fault detection and avoidance for wind turbines.

BACKGROUND

Wind power is considered one of the cleanest, most environmentally friendly energy sources presently available, and wind turbines have gained increased attention in this regard. A modern wind turbine typically includes a tower, generator, gearbox, nacelle, and one or more rotor blades. The rotor blades capture kinetic energy of wind using known airfoil principles. For example, rotor blades typically have the cross-sectional profile of an airfoil such that, during operation, air flows over the blade producing a pressure difference between the sides. Consequently, a lift force, which is directed from a pressure side towards a suction side, acts on the blade. The lift force generates torque on the main rotor shaft, which is typically geared to a generator for producing electricity.

Wind turbines are exposed to large variations in wind inflow, which exert varying loads to the wind turbine structure, particularly the wind turbine rotor and shaft. Therefore, some known wind turbines include sensor assemblies to detect characteristics of the wind such as direction and speed remotely. The detected wind characteristics may be used to control mechanical loads of the wind turbine. For example, based on a detected wind speed, the wind turbine may be controlled to operate at a particular output power. The output power is generally selected using a wind speed power curve.

Wind turbines are also generally equipped with various monitoring systems to ensure certain wind turbine components are operating within safe limits. For example, the oil within the gearbox should be maintained within a certain temperature range during operation. Therefore, if a thermal event occurs (i.e., the gearbox temperature exceeds a predetermined temperature threshold), a fault will be generated by the gearbox monitoring system. However, such faults are typically generated before temperatures exceed safe limits to protect the associated wind turbine component. Thus, when these faults arise, the wind turbine is shut down and stops producing power.

Accordingly, an improved system and method for fault detection and avoidance would be welcomed in the art as that would allow to improve availability and energy produced by the wind turbines. Thus, the present disclosure is directed to a system and method for learning-based fault detection and avoidance for wind turbines.

BRIEF DESCRIPTION

Aspects and advantages of the invention will be set forth in part in the following description, or may be obvious from the description, or may be learned through practice of the invention.

In one aspect, the present disclosure is directed to a method predicting and avoiding component faults that result in a shutdown of a wind turbine. The method includes receiving, via a controller, operational data of the wind turbine. The method also includes predicting, via a predictive model of the controller, current or future behavior of the wind turbine using the operational data. Further, the method includes determining, via a fault detection model of the controller, whether the current or future behavior of the wind turbine indicates an upcoming short-term fault or an upcoming long-term fault occurring in the wind turbine. The upcoming short-term fault occurs within a first time frame and the upcoming long-term fault occurs within a second time frame. The second time frame is longer than the first time frame. Moreover, the method includes determining, via a prescriptive action model of the controller, a corrective action for the wind turbine based on whether the future behavior of the wind turbine indicates the upcoming short-term fault or the upcoming long-term fault occurring in the wind turbine. Thus, the method also includes implementing, via the controller, the corrective action for the wind turbine during operation thereof to prevent the upcoming short-term fault or the upcoming long-term fault from occurring in the wind turbine.

In an embodiment, the operational data of the wind turbine includes high-frequency operational data of the wind turbine.

In another embodiment, the predictive model of the controller includes a machine-learned model. In such embodiments, the machine-learned model may be an unsupervised learning-based model, a supervised learning-based model, and/or a self-supervised learning-based model. In another embodiment, the predictive model of the controller uses a machine-learned model as an estimator to estimate the current values of the monitored signal.

In further embodiments, the fault detection model is configured with instructions to continuously determine a residual value between an expected measurement and an actual measurement and to continuously determine whether the future behavior of the wind turbine indicates the upcoming short-term fault or the upcoming long-term fault occurring in the wind turbine based on the residual value or some temporal behavior statistics of the residual value.

In additional embodiments, the fault detection model is configured with instructions to continuously compare the residual value with a threshold value and continuously determine whether the future behavior of the wind turbine indicates the upcoming short-term fault or the upcoming long-term fault occurring in the wind turbine based on the residual value varying from the threshold value by a certain percentage.

In yet another embodiment, the method may include determining, via a competency model, a statistical competence level of the machine-learned model of the predictive model to ensure the predicted future behavior is reliable and is above a predetermined competency. In an embodiment, for example, the competency model may be an unsupervised learning-based model, a supervised learning-based model, and/or a self-supervised learning-based model.

In several embodiments, the method may include retraining or updating the machine-learned model of the predictive model on the operational data when the competency model is below the predetermined competency.

In particular embodiments, the corrective action for avoiding a short-term fault may include at least one of derating the wind turbine, uprating the wind turbine, adjusting a speed set point of the wind turbine, adjusting a torque set point of the wind turbine, pitching the wind turbine, yawing the wind turbine, adjusting a temperature set point of the wind turbine, or adjusting set points of the auxiliary components, such as fans, pumps, heaters, etc. Thus, in an embodiment, the corrective action excludes shutting down the wind turbine.

In other embodiments, the corrective action for avoiding a long-term fault may include at least one of the short-term fault corrective actions, automated/manual turbine component inspection, automated/manual turbine component repair, or automated/manual turbine component maintenance, such as applying lubrication or cleaning.

In certain embodiments, the method further includes collecting and storing at least one of the corrective action or post-corrective action data in the prescriptive action model for continued learning of the prescriptive action model.

In an embodiment, the prescriptive action model of the controller includes a machine-learned model, such as a supervised-learning model. In another embodiment, the prescriptive action model may include a rule-based approach, wherein actions are chosen based on a pre-determined set of if-then rules or mathematical expressions with pre-defined parameters.

In further embodiments, the method includes determining parameters for avoiding the upcoming short-term fault or the upcoming long-term fault using active learning and inputting the parameters in the prescriptive action model of the controller.

In additional embodiments, the method includes adapting the prescriptive action model based on at least one of one or more environmental conditions and one or more operational conditions.

In another aspect, the present disclosure is directed to a system for predicting and avoiding component faults that result in a shutdown of a wind turbine. The system includes a controller having a predictive model and a prescriptive action model. The predictive model includes a machine-learned model configured with instructions to receive operational data of the wind turbine and predict future behavior or estimate current behavior of the wind turbine using the operational data. The controller also includes a fault detection model configured with instructions to determine whether the future or current behavior of the wind turbine indicates an upcoming short-term fault or an upcoming long-term fault occurring in the wind turbine, the upcoming short-term fault occurring within a first time frame, the upcoming long-term fault occurring within a second time frame, the second time frame being longer than the first time frame. The prescriptive action model includes a instructions to determine a corrective action for the wind turbine based on whether the future or current behavior of the wind turbine indicates the upcoming short-term fault or the upcoming long-term fault occurring in the wind turbine. The controller further includes at least one processor configured with instructions to implement the corrective action for the wind turbine during operation thereof to prevent the upcoming short-term fault or the upcoming long-term fault from occurring in the wind turbine. In an embodiment, the controller can be located at or within the wind turbine, at the wind farm, or in a cloud infrastructure. It should be understood that the system may further include any of the additional features and/or steps described herein.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

BRIEF DESCRIPTION OF THE DRAWINGS

A full and enabling disclosure of the present invention, including the best mode thereof, directed to one of ordinary skill in the art, is set forth in the specification, which makes reference to the appended figures, in which:

FIG. 1 illustrates a perspective view of one embodiment of a wind turbine according to the present disclosure;
FIG. 2 illustrates a block diagram of one embodiment of a wind turbine control system for use in controlling the wind turbine shown in FIG. 1;
FIG. 3 illustrates a schematic diagram of one embodiment of a wind farm according to the present disclosure;

FIG. 4 illustrates a flow diagram of one embodiment of a method for predicting and avoiding component faults that result in a shutdown of the wind turbine according to the present disclosure;

FIG. 5 illustrates a schematic diagram of one embodiment of a system for predicting and avoiding component faults that result in a shutdown of the wind turbine according to the present disclosure;

FIG. 6 illustrates a schematic diagram of another embodiment of a system for predicting and avoiding component faults that result in a shutdown of the wind turbine according to the present disclosure, particularly illustrating online and offline components;

FIG. 7 illustrates a graph of one embodiment of a power curve of a wind turbine according to the present disclosure, particularly illustrating rated power being derated to avoid a fault;

FIG. 8 illustrates a graph of one embodiment of a short-term fault in operational data of a wind turbine according to the present disclosure; and

FIG. 9 illustrates a graph of one embodiment of a long-term fault in operational data of a wind turbine according to the present disclosure.

## DETAILED DESCRIPTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

In the following specification and the claims, reference will be made to a number of terms, which shall be defined to have the following meanings.

The singular forms "a", "an", and "the" include plural references unless the context clearly dictates otherwise.

Approximating language, as used herein throughout the specification and claims, may be applied to modify any quantitative representation that could permissibly vary without resulting in a change in the basic function to which it is related. Accordingly, a value modified by a term or terms, such as "about," "substantially," and "approximately," are not to be limited to the precise value specified. In at least some instances, the approximating language may correspond to the precision of an instrument for measuring the value. Here and throughout the specification and claims, range limitations may be combined and/or interchanged, such ranges are identified and include all the sub-ranges contained therein unless context or language indicates otherwise.

In general, the present disclosure is directed to systems and methods for learning-based fault detection and avoidance for wind turbines. In certain embodiments, the system of the present disclosure includes a competence monitoring model which assesses the statistical competence of the models on the available data. Further, the system of the present disclosure includes a predictive model configured for making predictions of system behavior. Moreover, the system of the present disclosure includes a prescriptive action model that makes recommendations to the controller relating to which correction actions to take. The prescriptive action model can also be adapted to prevalent environmental (e.g., ambient temperature, wind speed, etc.) and system (i.e., wind turbine) conditions. For example, if a fault is predicted at midnight in cooler ambient conditions, a larger wait time can be provided between the time of the alarm and the time at which the corrective action (e.g., the partial derating of the wind turbine) is taken. Moreover, the system of the present disclosure includes a learning module configured to retrain the predictive model(s) if and when the competency of the models is insufficient. In addition, the system of the present disclosure includes a model configured to collect the data post-prescriptive action and use such data to further improve the prescriptive action.

Thus, in an example, thermal events (such as gearbox oil over temperature or generator bearing over temperature) may be raised before the component temperatures exceed the safe limits. When such faults are raised, the wind turbine is shut down, thereby leading to a loss of power. Accordingly, the present disclosure is configured to predict the occurrence of these faults and take corrective action so as to avoid these faults. For example, in case of gearbox oil over temperature, the wind turbine may be partially de-rated to about 70% of rated power capacity. If such correction actions are completed in a timely manner, the gearbox temperature will reduce and hence the occurrence of the fault can be avoided.

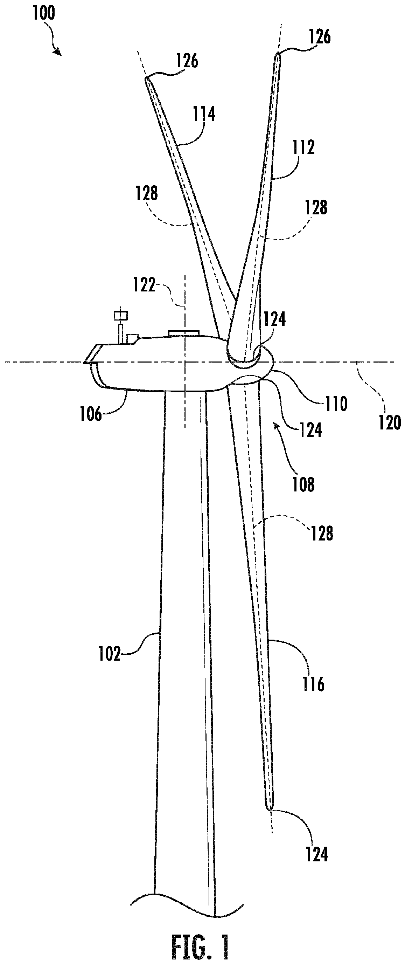

Referring now to FIG. 1, a schematic perspective view of a wind turbine 100 according to the present disclosure is illustrated. As shown in the exemplary embodiment, the wind turbine 100 is a horizontal axis wind turbine. Further, as shown, the wind turbine 100 includes a tower 102 extending from a supporting surface (not shown), a nacelle 106 coupled to tower 102, and a rotor 108 coupled to nacelle 106. Moreover, as shown, the rotor 108 has a rotatable hub 110 and a plurality of blades 112, 114, 116 coupled to rotatable hub 110. In the illustrated embodiment, the rotor 108 has a first blade 112, a second blade 114, and a third blade 116. In alternative embodiments, the rotor 108 may have any number of blades 112, 114, 116 that enables the wind turbine 100 to function as described herein.

In certain embodiments, the tower 102 may be fabricated from tubular steel or any other suitable material that enables the wind turbine 100 to operate as described herein. For example, in some embodiments, the tower 102 is any one of a lattice steel tower, guyed tower, concrete tower, and/or hybrid tower.

Still referring to FIG. 1, as shown, the blades 112, 114, 116 are positioned about the rotatable hub 110 to facilitate rotating the rotor 108 when wind flows through the wind turbine 100. Thus, when the rotor 108 rotates, kinetic energy from the wind is transferred into usable mechanical energy, and subsequently, electrical energy. During operation, the rotor 108 rotates about a rotation axis 120 that is substantially parallel to the supporting surface. In addition, in some embodiments, the rotor 108 and the nacelle 106 are rotated about the tower 102 on a yaw axis 122 to control the orientation of the blades 112, 114, 116 with respect to the direction of wind. In alternative embodiments, the wind turbine 100 includes any rotor 108 that enables the wind turbine 100 to operate as described herein.

In particular embodiments, as shown, each blade 112, 114, 116 is coupled to the rotatable hub 110 at a hub end 124 and extends radially outward from rotatable hub 110 to a distal end 126. Each blade 112, 114, 116 defines a longitudinal axis 128 extending between hub end 124 and distal end 126. In alternative embodiments, the wind turbine 100 includes any blade 112, 114, 116 that enables wind turbine 100 to operate as described herein.

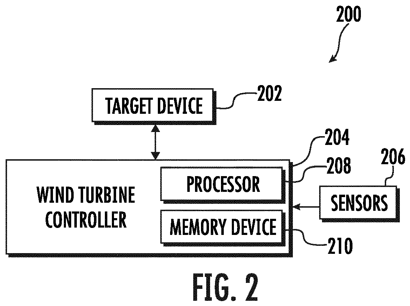

Referring now to FIG. 2, a block diagram of an exemplary wind turbine control system 200 according to the present disclosure is illustrated. In particular, as shown, the wind turbine control system 200 includes a target device 202, a wind turbine controller 204, and one or more sensors 206. In some embodiments, the target device 202 is substantially similar to the wind turbine 100 (shown in FIG. 1). Additionally, or alternatively, the target device 202 may be another device capable of being controlled electronically. Further, the wind turbine controller 204 is communicatively coupled to the target device 202 and includes a processor 208 and a memory device 210. In some embodiments, at least some functionality of the wind turbine controller 204 is performed by the processor 208 and/or the memory device 210.

In the exemplary embodiment, the target device 202 includes a wind turbine that converts kinetic wind energy into blade aerodynamic forces that induce a mechanical rotational torque to generate electric power, for example, by transferring the kinetic wind energy into blade aerodynamic forces that induce a mechanical rotational torque. An amount of output power produced by the target device 202 depends on, for example, an amount of speed and/or torque of operation of the target device 202. In addition, other characteristics of the target device 202 may depend on the speed and/or torque of operation of the target device 202, such as a fatigue on components of the target device 202.

Moreover, in an embodiment, the wind turbine controller 204 controls the operation of the target device 202, for example, by controlling the speed and/or torque at which the target device 202 operates. For example, in some embodiments, the wind turbine controller 204 may control a pitch angle of blades 112, 114, 116 (shown in FIG. 1), a yaw of the target device 202, a gearbox setting of the target device 202, and/or another operating parameter of the target device 202 that affects the speed and/or torque. By controlling the speed and/or torque of the target device 202, the wind turbine controller 204 may select the output power at which the target device 202 operates.

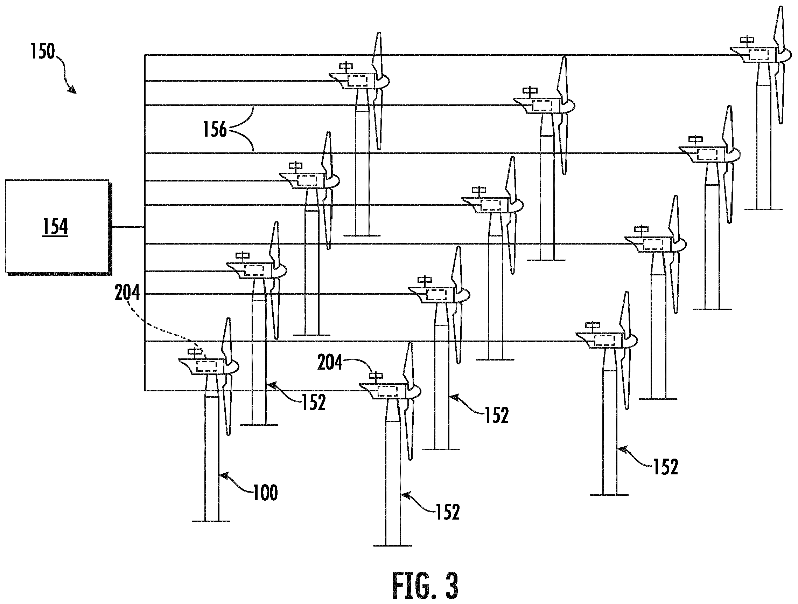

Referring now to FIG. 3, the wind turbine 100 described herein may be part of a wind farm 150 that is controlled according to the system and method of the present disclosure is illustrated. As shown, the wind farm 150 may include a plurality of wind turbines 152, including the wind turbine 100 described above, and a farm-level controller 154. For example, as shown in the illustrated embodiment, the wind farm 150 includes twelve wind turbines, including wind turbine 100. However, in other embodiments, the wind farm 150 may include any other number of wind turbines, such as less than twelve wind turbines or greater than twelve wind turbines. In one embodiment, the control system 200 of the wind turbine 100 may be communicatively coupled to the farm-level controller 154 through a wired connection, such as by connecting the control system 200 through suitable communicative links 156 or networks (e.g., a suitable cable). Alternatively, the control system 200 may be communicatively coupled to the farm-level controller 154 through a wireless connection, such as by using any suitable wireless communications protocol known in the art. In addition, the farm-level controller 154 may be generally configured similar to the control systems 200 for each of the individual wind turbines 152 within the wind farm 150.

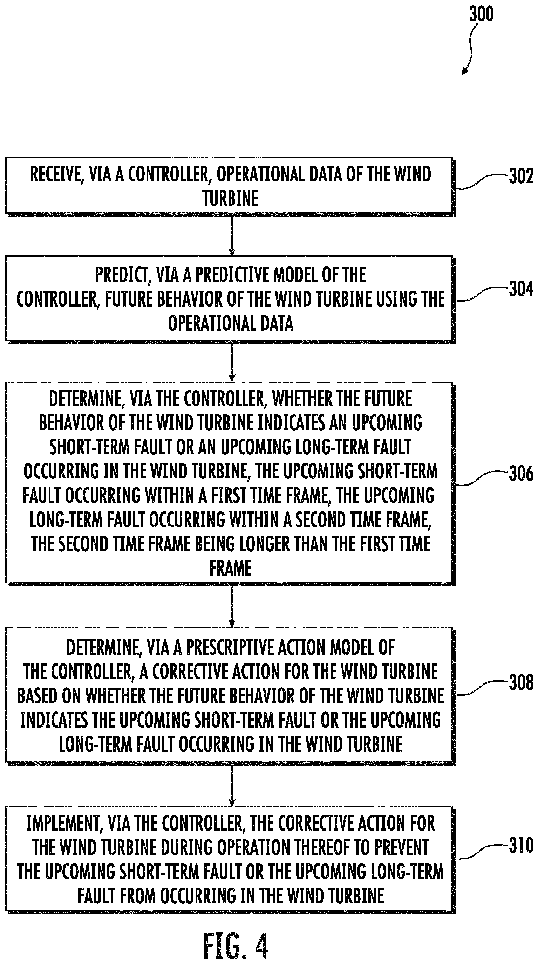

Referring now to FIG. 4, a flow diagram of one embodiment of a method 300 for predicting and avoiding component faults that result in a shutdown of the wind turbine according to the present disclosure is illustrated. In general, the method 300 will be described herein with reference to the wind turbine 100 and control system 200 described above with reference to FIGS. 1-3. However, it should be appreciated by those of ordinary skill in the art that the disclosed method 300 may generally be utilized with any wind turbine having any suitable configuration. In addition, although FIG. 4 depicts steps performed in a particular order for purposes of illustration and discussion, the methods discussed herein are not limited to any particular order or arrangement. One skilled in the art, using the disclosures provided herein, will appreciate that various steps of the methods disclosed herein can be omitted, rearranged, combined, and/or adapted in various ways without deviating from the scope of the present disclosure. Moreover, in some embodiments, the method 300 may be performed by the farm-level controller 154, the wind turbine controller 204, a separate controller, or via the cloud.

Referring still to FIG. 4, as shown at (302), the method 300 may include receiving, via a controller, operational data of the wind turbine 100. In such embodiments, for example, the operational data may be high-frequency operational data. Further, in an embodiment, data analysis with high frequency data at farm-level can be used to detect abrupt anomalies, however, to observe long-term drift and fleet-level behaviors, cloud analytics may also be used. Moreover, in an embodiment, data compression offers ways to capture relevant measurements beyond the minimum, maximum, mean, median, and histogram, so that certain signal dynamics are retained as well for fleet-level analysis.

Further, as shown at (304), the method 300 may include predicting, via a predictive model of the controller, future behavior of the wind turbine using the operational data. As shown at (306), the method 300 may include determining, via the controller, whether the future behavior of the wind turbine indicates an upcoming short-term fault or an upcoming long-term fault occurring in the wind turbine 100. The upcoming short-term fault occurs within a first time frame and the upcoming long-term fault occurs within a second time frame. The second time frame is longer than the first time frame. As shown at (308), the method 300 may include determining, via a prescriptive action model of the controller, a corrective action for the wind turbine 100 based on whether the future behavior of the wind turbine 100 indicates the upcoming short-term fault or the upcoming long-term fault occurring in the wind turbine 100. As shown at (310), the method 300 may include implementing, via the controller, the corrective action for the wind turbine 100 during operation thereof to prevent the upcoming short-term fault or the upcoming long-term fault from occurring in the wind turbine 100.

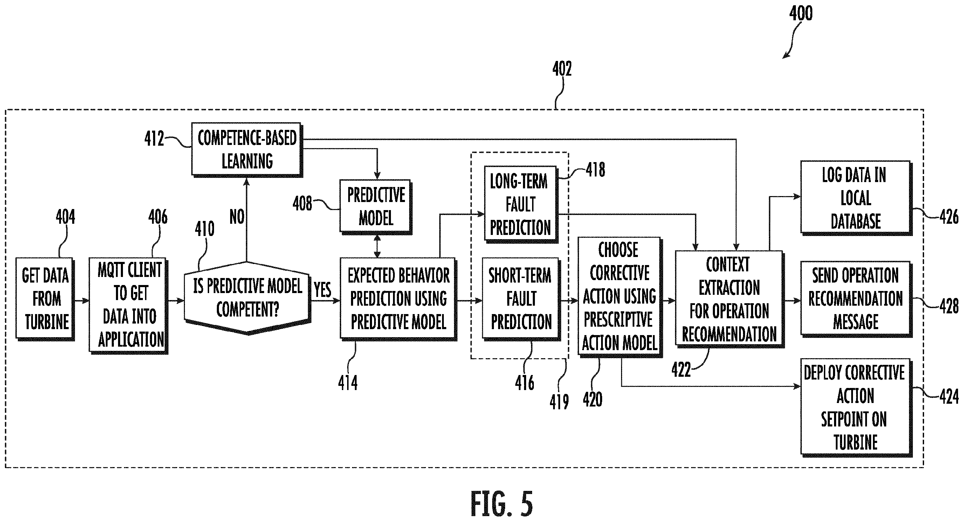

The method 300 of FIG. 4 can be better understood with reference to FIG. 5. In particular, FIG. 5 illustrates a flow diagram of one embodiment of a system 400 for predicting and avoiding component faults that result in a shutdown of the wind turbine 100 according to the present disclosure. For example, as shown at 404, a controller 402 of the system 400 receives operational data from sensors 206, such as a current wind speed and/or a current air density. In certain embodiments, the controller 402 can be located at or within the wind turbine 10, at the wind farm 150, or in a cloud infrastructure. Thus, as shown at 406, a data pipeline transmits the operational data into an application of the controller 402.

In addition, in an embodiment, a design of experiment phase may be conducted, for example, during the initial training phase, where control parameters are cycled following a schedule, randomly, or intelligently through a pre-defined set of levels or via a random sampling or an intelligent approach (such as Bayesian optimization, reinforcement learning, etc.) over a continuous or discrete set of control set points. This design of experiment phase is concluded either based on time duration, on number of data instances collected, or another stopping criterion to obtain an initial set of training data. Machine learning model(s) may be trained from data compiled during this data gathering phase either (a) to predict a signal of interest, such as, gearbox oil sump temperature, and then identify set points to avoid the predicted upcoming fault; or (b) to directly recommend a set point that is likely to avoid the upcoming fault. Once trained, the prescriptive action model 420 may be used to obtain the corrective action, for example, control set point behavior of the target device 202 using the operational data.

In certain embodiments, for example, the training data described herein generally refers to a time series data of different inputs (X) and outputs (Y). For example, for a gearbox oil sump temperature application, the inputs may be power, ambient temperature, wind speed and nacelle temperature, with the output being the gearbox oil sump temperature. For example, sample training data is represented below in Table 1:

| Timestamp | Ambient Temperature | Power | Wind Speed | Gearbox Oil Sump Temperature |
|---|---|---|---|---|
| 2019-01-01 00:00:00 | 25.3 | 1500 | 9.8 | 62 |
| 2019-01-01 00:00: 10 | 25.9 | 1501 | 9.7 | 61 |
| 2019-01-01 00:00:20 | 25,8 | 1520 | 9.9 | 62 |

In addition, in an embodiment, the machine learning model is trained over historical data or new data collected during non-faulty or normal regions of operation to obtain the predictive model(s) 408 or to tune the prescriptive action model(s) 420.

Still referring to FIG. 5, as shown at 410, the controller 402 is configured to evaluate the competency level of the predictive model 408. For example, as shown in the illustrated embodiment, the controller 402 includes a competency model 412 for determining a statistical competence level of the machine-learned model of the predictive model 408 to ensure the predicted future behavior is above a predetermined competency. In an embodiment, for example, the competency model 412 may be an unsupervised-learning model. Furthermore, in an embodiment, the competency model 412 may use density estimation for determining whether the machine-learned model of the predictive model 408 is of a certain competence level.

Accordingly, in such embodiments, the competency model 412 may give an inherent assessment of model competency of the predictive model 408 based on the uncertainty level of its prediction, such as in the case of ensemble models, Bayesian models (including Gaussian processes), non-conformal prediction intervals, or other methods that can provide prediction uncertainty. Alternatively, an assessment of model competency of the predictive model 408 can be learned from the training data using density estimation, level-set estimation, one-class classifier, manifold learning, anomaly detection, or other supervised or unsupervised learning approaches. Additionally, the controller 402 may use both internal and external assessment of model competency for an obtained data instance during operation. In this way, for a particular query or feedback state, the competency model 412 can assess its level of competence and if competent, then the controller 402 will use the predictive model 408 to obtain the expected behavior, generate fault predictions, and send control setpoint, when needed, to avoid a predicted fault, and if incompetent, then the predictive model 408 is not used, fault prediction is not generated, and the turbine runs as if this controller 402 is absent.

In some embodiments, the controller 402 is further configured to calculate a competence level for a given input of measurement data. For example, if the input data is the same or similar to data that was used to generate the predictive model 408, the competence level may be relatively high, and if the input data is different or dissimilar to previous data, the competence level may be relatively low. In some such embodiments, if the competence level is below a threshold, the controller 402 does not control the target device 202 based on the predictive model 408, and instead it might take an action to update or retrain the predictive model 408 and increase the competence level. For example, in some embodiments, the controller 402 receives measurement data derived from other wind turbine control systems that experienced operating conditions similar to the current operating conditions of the target device 202, and uses the received measurement data to update the predictive model 408. In some embodiments, the controller 402 additionally or alternatively initiates a subsequent training phase where measurement data reflective of the current conditions is collected from the target device 202 and the sensors 206 and used to update the predictive model 408. In some embodiments, the controller 404 continues to refine and/or update the predictive model 408 during normal operation of the target device 202 based on measurement data received from sensors 206 during the operating phase.

Referring still to FIG. 5, as shown at 414, if the competency level is sufficient, the predictive model 408 of the controller 402 includes one or more machine-learned models, such as a supervised-learning model, that is configured with instructions to predict future behavior or estimate current behavior of the wind turbine 100 using the operational data. Such machine-learned models may include neural networks (e.g., deep neural networks) or other types of machine-learned models, including non-linear models and/or linear models. Neural networks can include feed-forward neural networks, recurrent neural networks (e.g., long short-term memory recurrent neural networks), convolutional neural networks or other forms of neural networks. Some example machine-learned models can leverage an attention mechanism such as self-attention. For example, some example machine-learned models can include multi-headed self-attention models (e.g., transformer models).

More specifically, in an embodiment, as shown, the controller 402 may include a fault detection model 419 configured with instructions to generate an upcoming short-term fault prediction 416 and/or an upcoming long-term fault prediction 418, respectively. In certain embodiments, for example, the fault detection model 419 is a machine-learned (unsupervised) model. Thus, the fault detection model 419 provides early detection of performance drifts in critical directions to provide information about upcoming faults and to enable mitigation of the fault(s) to improve turbine availability. As mentioned, the upcoming short-term fault occurs within a first time frame and the upcoming long-term fault occurs within a second time frame, with the first time frame (e.g., within the next few seconds, minutes, or hours) being shorter than the second time frame (e.g., within the next few hours, days, or months). Moreover, in an embodiment, the faults described herein may include thermal faults (such as gearbox oil temperature, pitch system temperature, generator winding temperatures, component bearing temperatures, blade heating systems, yaw system temperature, converter temperature, or cabinet temperature, etc.) as well as any other fault of any wind turbine component (e.g., such as tower vibration, sensor faults, pitch bearing diagnostics, generator performance, etc.).

Thus, in an embodiment, the fault detection model 419 may be configured with instructions to continuously determine a residual value between an expected measurement and an actual measurement and continuously determine whether the future behavior of the wind turbine 100 indicates an upcoming short-term or long-term faults occurring in the wind turbine 100 based on the residual value.

In such embodiments, the non-Markovian model set forth in Equation (1) allows for the slow time scale dynamics of temperature. For example, in an embodiment, the expected measurement $\hat{y}(t)$ may be calculated using Equation (1) set forth below:

$$\hat{y}(t) = f(x_1(t), x_2(t), \ldots x_n(t)) \qquad \text{Equation (1)}$$

where f is a linear or non-linear model.

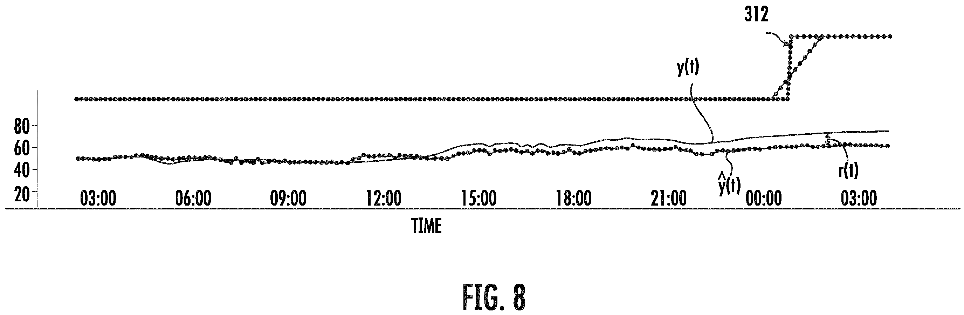

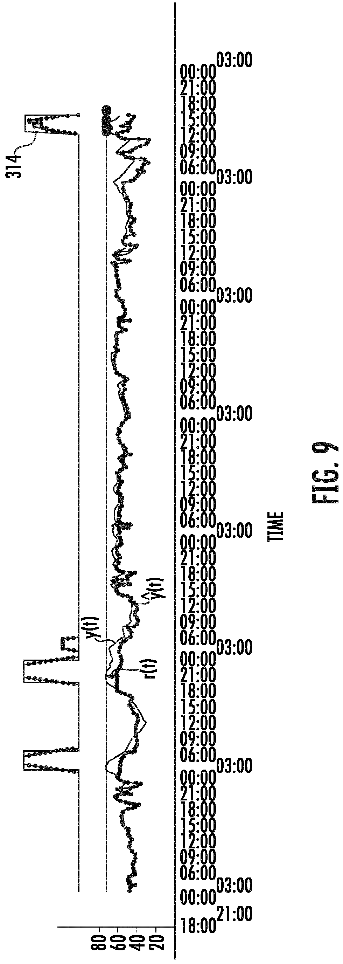

Furthermore, the actual measurement or value y(t) may be determined via the sensors 206 and or the controller 402 using estimations. An example short-term fault estimation 312 is illustrated in FIG. 8 and an example long-term fault estimation 314 is illustrated in FIG. 9. Accordingly, the residual value r(t) can be calculated by the controller 402 using Equation (2) set forth below.

$$r(t) = y(t) - \hat{y}(t) \qquad\qquad \text{Equation (2)}$$

Thus, in one embodiment, a histogram or probability distribution of the residual over normal operations is fitted. For any new sequence of data over a fixed window length (W), if the number of large (L) residuals which are in the extremities of the fitted probability distribution (or histogram) is higher than a threshold (T), a fault is detected. In certain embodiments, the values of W, L and T are determined using cross-validation.

Furthermore, in an embodiment, for example, as shown in FIGS. 8 and 9, the fault detection model 419 may continuously compare the residual value r(t) with a threshold or baseline value while also monitoring whether the residual value varies from the threshold value by a certain percentage. Accordingly, the variation in the residual value r(t) can be used as a proxy for short-term or long-term faults occurring in the wind turbine 100. In other words, the variation can be used to determine whether a fault may occur in the short-term (e.g., within the next few seconds, minutes, or a few hours) or the long-term (e.g., within the next few hours, days, or months). In particular, as the residual value r(t) increases, a short-term fault 312 or a long-term fault 314 can be flagged by the controller 402.

Referring back to FIG. 5, as shown, the controller 402 may also include a prescriptive action model 420 for determining a corrective action for the wind turbine 100 based on whether the future behavior of the wind turbine 100 indicates an upcoming short-term fault or an upcoming long-term fault occurring in the wind turbine 100. As such, the prescriptive action model 420 enables control action selection for performance optimization to avoid the fault(s).

In an embodiment, for example, the prescriptive action model 420 of the controller 402 includes a machine-learned model, such as a supervised model. As mentioned, such machine-learned models may include neural networks (e.g., deep neural networks) or other types of machine-learned models, including non-linear models and/or linear models. Neural networks can include feed-forward neural networks, recurrent neural networks (e.g., long short-term memory recurrent neural networks), convolutional neural networks or other forms of neural networks. Some example machine-learned models can leverage an attention mechanism such as self-attention. For example, some example machine-learned models can include multi-headed self-attention models (e.g., transformer models). In another embodiment, the prescriptive action model may include a rule-based approach, wherein actions are chosen based on a pre-determined set of if-then rules or mathematical expressions with pre-defined parameters.

Moreover, the training data for the machine-learned model of the prescriptive action model 420 may include historical wind turbine data and/or design of experiments data as described herein. Thus, human experts can specifically assign desired corrective actions for particular short- or long-term faults. Accordingly, the machine-learned model of the prescriptive action model 420 can be trained on such data and can improve over time with new input data. More specifically, in an embodiment, the controller 402 may determine parameters for avoiding the upcoming short-term fault or the upcoming long-term fault using active learning and input the parameters in the prescriptive action model 420 of the controller 402.

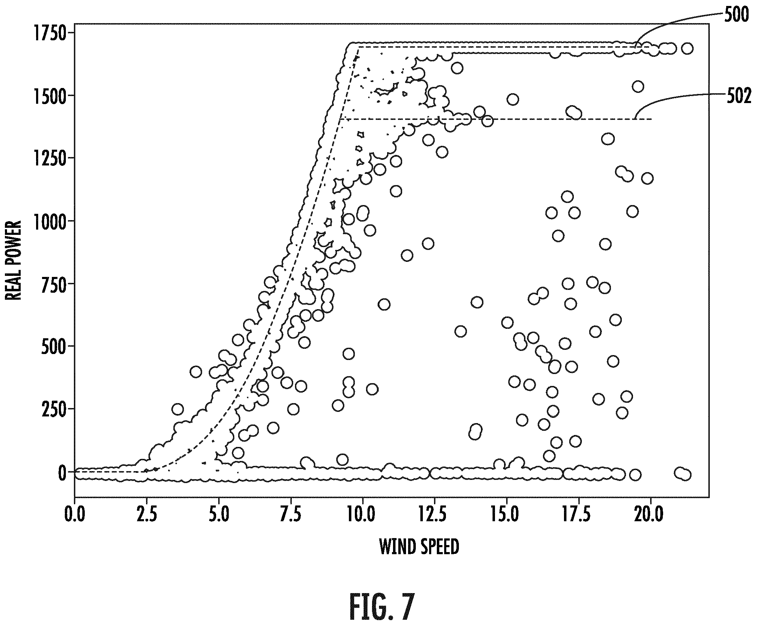

In particular embodiments, for example, the corrective action may include at least one of derating the wind turbine 100, uprating the wind turbine 100, adjusting a speed set point of the wind turbine 100, pitching the wind turbine 100, yawing the wind turbine 100, or adjusting a temperature set point of fans and/or pumps in the wind turbine 100. Accordingly, in an embodiment, the corrective action excludes shutting down the wind turbine 100. Thus, as shown at 424, the controller 402 employs the determined corrective action on the wind turbine 100. As shown in FIG. 7, as an example, the wind turbine 100 may be derated such that the rated power 500 is set equal to an updated reduced power 502 (e.g., such as about 70% of the rated power set point). In such instances, though the wind turbine 100 is produced less power, a turbine shut down is avoided, therefore, overall power production is increased.

Referring back to FIG. 5, as shown at 422, the controller 402 can also give context to the extracted/selected corrective action (e.g., based on the outputs from the competency model 412 and/or whether the fault is predicted to occur in the long-term or short-term). In addition, as shown at 426, various data and outputs from the controller 402 (e.g., the corrective action or post-corrective action data) can be collected and stored in a local database, e.g., for continued learning of the prescriptive action model 420 or for debugging traceability. Accordingly, in an embodiment, the controller 402 is configured to adapt the prescriptive action model 420 based on at least one of one or more environmental conditions and one or more operational conditions of the wind turbine 100. Moreover, in an embodiment, as shown at 428, the controller 402 may also send operation recommendation messages to take corrective actions for long-term fault predictions.

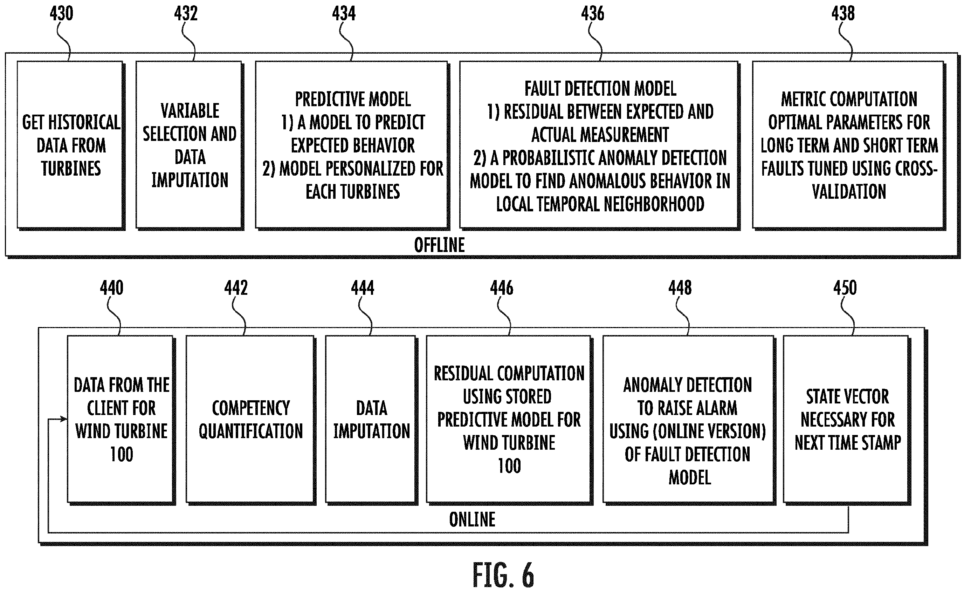

Referring now to FIG. 6, a schematic diagram of one embodiment of different offline and online components of the system 400 described herein are provided. In particular, as shown, tasks 430, 432, 434, 436, and 438 can be completed offline, whereas tasks 440, 442, 444, 446, 448, and 450 can be completed online. More specifically, as shown at 430 and 432, historical data from turbines and variable selection and data imputation can be completed offline. Further, as shown at 434 and 436, the predictive model 408 and the fault detection model 419 described herein may be developed offline with historical data. Moreover, as shown at 438, metric computation for determining optimal parameters for long-term and short-term faults can be tuned using cross validation can also be completed offline.

Still referring to FIG. 6, as shown at 440, data from the client for the wind turbine 100 is received online. As shown at 442 and 444, the controller 402 can determine the competency quantification and complete the data imputation online. Furthermore, as shown at 448, the fault/anomaly detection model 419 is configured to raise the alarm or warning based on the residual value online. As shown at 450, the state vector necessary for the next time stamp is also generated online.

An exemplary technical effect of the methods, systems, and apparatus described herein includes at least one of: (a) improving an annual energy production (AEP) of a wind turbine by using a predictive and prescriptive model to predict and avoid future faults of the wind turbine, thereby avoiding a wind turbine shut down; (b) reducing downtime and improving availability of a wind turbine by avoiding unnecessary wind turbine shut downs; (c) reducing unplanned maintenance events by providing short-term and long-term fault predictions that allows for prioritization of maintenance events for key wind turbines

Exemplary embodiments of a system for predictive fault detection and avoidance of wind turbines are described herein. The systems and methods of operating and manufacturing such systems and devices are not limited to the specific embodiments described herein, but rather, components of systems and/or steps of the methods may be utilized independently and separately from other components and/or steps described herein. For example, the methods may also be used in combination with other electronic systems, and are not limited to practice with only the electronic systems, and methods as described herein. Rather, the exemplary embodiment can be implemented and utilized in connection with many other electronic systems.

Some embodiments involve the use of one or more electronic or computing devices. Such devices typically include a processor, processing device, or controller, such as a general purpose central processing unit (CPU), a graphics processing unit (GPU), a microcontroller, a reduced instruction set computer (RISC) processor, an application specific integrated circuit (ASIC), a programmable logic circuit (PLC), a field programmable gate array (FPGA), a digital signal processing (DSP) device, and/or any other circuit or processing device capable of executing the functions described herein. The methods described herein may be encoded as executable instructions embodied in a computer readable medium, including, without limitation, a storage device and/or a memory device. Such instructions, when executed by a processing device, cause the processing device to perform at least a portion of the methods described herein. The above examples are exemplary only, and thus are not intended to limit in any way the definition and/or meaning of the term processor and processing device. Furthermore, in an embodiment, the processing capability might be located at the wind turbine, at the wind farm, or in the cloud infrastructure.

Although specific features of various embodiments of the disclosure may be shown in some drawings and not in others, this is for convenience only. In accordance with the principles of the disclosure, any feature of a drawing may be referenced and/or claimed in combination with any feature of any other drawing.

These and further aspects of the invention are summarized by the subject matter of the following clauses:

Clause 1. A method for predicting and avoiding component faults that result in a shutdown of a wind turbine, the method comprising:

receiving, via a controller, operational data of the wind turbine;
predicting, via a predictive model of the controller, current or future behavior of the wind turbine using the operational data;
determining, via a fault detection model of the controller, whether the current or future behavior of the wind turbine indicates an upcoming short-term fault or an upcoming long-term fault occurring in the wind turbine, the upcoming short-term fault occurring within a first time frame, the upcoming long-term fault occurring within a second time frame, the second time frame being longer than the first time frame;
determining, via a prescriptive action model of the controller, a corrective action for the wind turbine based on whether the future behavior of the wind turbine indicates the upcoming short-term fault or the upcoming long-term fault occurring in the wind turbine; and
implementing, via the controller, the corrective action for the wind turbine during operation thereof to prevent the upcoming short-term fault or the upcoming long-term fault from occurring in the wind turbine.

Clause 2. The method of clause 1, wherein the operational data of the wind turbine comprises high-frequency operational data of the wind turbine.
Clause 3. The method of any of the preceding clauses, wherein the predictive model of the controller comprises a machine-learned model, the machine-learned model being a supervised-learning model.

Clause 4. The method of any of the preceding clauses, wherein the fault detection model is configured with instructions to continuously determine a residual value between an expected measurement and an actual measurement and to continuously determine whether the future behavior of the wind turbine indicates the upcoming short-term fault or the upcoming long-term fault occurring in the wind turbine based on the residual value.

Clause 5. The method of clause 4, wherein the fault detection model is configured with instructions to continuously compare the residual value or a statistic based on the residual value with a threshold value and continuously determine whether the future behavior of the wind turbine indicates the upcoming short-term fault or the upcoming long-term fault occurring in the wind turbine.

Clause 6. The method of clause 3, further comprising determining, via a competency model of the controller, a statistical competence level of the machine-learned model of the predictive model to ensure the predictive model is above a predetermined competency.

Clause 7. The method of clause 6, wherein the competency model comprises a machine-learned model, the machine-learned model comprising at least one of an unsupervised learning-based model, a supervised learning-based model, or a self-supervised learning-based model.

Clause 8. The method of clause 6, further comprising retraining or updating the machine-learned model of the predictive model on the operational data when the competency model is below the predetermined competency.

Clause 9. The method of any of the preceding clauses, wherein the corrective action comprises short-term fault corrective actions and long-term fault corrective actions, the short-term fault corrective actions comprising at least one of derating the wind turbine, uprating the wind turbine, adjusting a speed set point of the wind turbine, adjusting a torque set point of the wind turbine, pitching the wind turbine, yawing the wind turbine, adjusting a temperature set point of the wind turbine, or adjusting set points of one or more auxiliary components, the long-term fault corrective actions comprising at least one of one or more of the short-term fault corrective actions, automated/manual turbine component inspection, automated/manual turbine component repair, or automated/manual turbine component maintenance.

Clause 10. The method of any of the preceding clauses, wherein the corrective action excludes shutting down the wind turbine.

Clause 11. The method of any of the preceding clauses, further comprising collecting and storing at least one of the corrective action or post-corrective action data for continued learning of the prescriptive action model.

Clause 12. The method of any of the preceding clauses, wherein the prescriptive action model of the controller comprises at least one of a machine-learned model, a predefined rule, or mathematical expression to determine the corrective action.

Clause 13. The method of any of the preceding clauses, where the predictive model, the fault detection model, and the prescriptive action model are trained or tuned with at least one of historical operational data or environmental data and are updated during operation with new operational or environmental data, wherein the new operational data is obtained via nominal operation, via active learning, or via one or more design of experiments.

Clause 14. A system for predicting and avoiding component faults that result in a shutdown of a wind turbine, the system comprising:

a controller comprising:

a predictive model comprising a machine-learned model configured with instructions to receive operational data of the wind turbine and estimate current behavior or predict future behavior of the wind turbine using the operational data;

a fault detection model configured with instructions to determine whether the current or future behavior of the wind turbine indicates an upcoming short-term fault or an upcoming long-term fault occurring in the wind turbine, the upcoming short-term fault occurring within a first time frame, the upcoming long-term fault occurring within a second time frame, the second time frame being longer than the first time frame;

a prescriptive action model comprising instructions to determine a corrective action for the wind turbine based on whether the future behavior of the wind turbine indicates the upcoming short-term fault or the upcoming long-term fault occurring in the wind turbine; and

at least one processor configured with instructions to implement the corrective action for the wind turbine during operation thereof to prevent the upcoming short-term fault or the upcoming long-term fault from occurring in the wind turbine.

Clause 15. The system of clause 14, wherein the machine-learned model of the predictive model is a supervised-learning model.

Clause 16. The system of clauses 14-15, wherein the fault detection model is further configured with instructions to:

continuously determine a residual value between an expected measurement and an actual measurement; and continuously determine whether the current or future behavior of the wind turbine indicates the upcoming short-term fault or the upcoming long-term fault occurring in the wind turbine based on the residual value.

Clause 17. The system of clause 16, further comprising a competency model comprising at least one processor programmed with another machine-learned model configured with instructions to:

determine a statistical competence level of the machine-learned model of the predictive model to ensure the predictive model is above a predetermined competency; and
retrain the machine-learned model of the predictive model on the operational data when the competency model is below the predetermined competency.

Clause 18. The system of clauses 14-17, wherein the corrective action comprises at least one of derating the wind turbine, uprating the wind turbine, adjusting a speed set point of the wind turbine, pitching the wind turbine, yawing the wind turbine, or adjusting a temperature set point of the wind turbine, and wherein the corrective action excludes shutting down the wind turbine.

Clause 19. The system of clauses 14-18, wherein the prescriptive action model of the controller comprises at least one of a machine-learned model, a predefined rule, mathematical expression, or a design of experiment.

Clause 20. The system of clause 19, wherein the machine-learned model comprises at least one of an unsupervised learning-based model, a supervised learning-based model, or a self-supervised learning-based model.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A method for predicting and avoiding component faults that result in a shutdown of a wind turbine, the method comprising:

    receiving, via a controller, operational data of the wind turbine;
    predicting, via a predictive model of the controller, current or future behavior of the wind turbine using the operational data;
    determining, via a fault detection model of the controller, whether the current or future behavior of the wind turbine indicates an upcoming short-term fault or an upcoming long-term fault occurring in the wind turbine, the upcoming short-term fault occurring within a first time frame, the upcoming long-term fault occurring within a second time frame, the second time frame being longer than the first time frame;
    determining, via a prescriptive action model of the controller, a corrective action for the wind turbine based on whether the future behavior of the wind turbine indicates the upcoming short-term fault or the upcoming long-term fault occurring in the wind turbine; and
    implementing, via the controller, the corrective action for the wind turbine during operation thereof to prevent the upcoming short-term fault or the upcoming long-term fault from occurring in the wind turbine.

2. The method of claim 1, wherein the operational data of the wind turbine comprises high-frequency operational data of the wind turbine.

3. The method of any of the preceding claims, wherein the predictive model of the controller comprises a machine-learned model, the machine-learned model being a supervised-learning model.

4. The method of any of the preceding claims, wherein the fault detection model is configured with instructions to continuously determine a residual value between an expected measurement and an actual measurement and to continuously determine whether the future behavior of the wind turbine indicates the upcoming short-term fault or the upcoming long-term fault occurring in the wind turbine based on the residual value.

5. The method of any of the preceding claims, wherein the fault detection model is configured with instructions to continuously compare the residual value or a statistic based on the residual value with a threshold value and continuously determine whether the future behavior of the wind turbine indicates the upcoming short-term fault or the upcoming long-term fault occurring in the wind turbine.

6. The method of any of the preceding claims, further comprising determining, via a competency model of the controller, a statistical competence level of the machine-learned model of the predictive model to ensure the predictive model is above a predetermined competency.

7. The method of any of the preceding claims, wherein the competency model comprises a machine-learned model, the machine-learned model comprising at least one of an unsupervised learning-based model, a supervised learning-based model, or a self-supervised learning-based model.

8. The method of any of the preceding claims, further comprising retraining or updating the machine-learned model of the predictive model on the operational data when the competency model is below the predetermined competency.

9. The method of any of the preceding claims, wherein the corrective action comprises short-term fault corrective actions and long-term fault corrective actions, the short-term fault corrective actions comprising at least one of derating the wind turbine, uprating the wind turbine, adjusting a speed set point of the wind turbine, adjusting a torque set point of the wind turbine, pitching the wind turbine, yawing the wind turbine, adjusting a temperature set point of the wind turbine, or adjusting set points of one or more auxiliary components, the long-term fault corrective actions comprising at least one of one or more of the short-term fault corrective actions, automated/manual turbine component inspection, automated/manual turbine component repair, or automated/manual turbine component maintenance.

10. The method of any of the preceding claims, wherein the corrective action excludes shutting down the wind turbine.

11. The method of any of the preceding claims, further comprising collecting and storing at least one of the corrective action or post-corrective action data for continued learning of the prescriptive action model.

12. The method of any of the preceding claims, wherein the prescriptive action model of the controller comprises at least one of a machine-learned model, a predefined rule, or mathematical expression to determine the corrective action.

13. The method of any of the preceding claims, where the predictive model, the fault detection model, and the prescriptive action model are trained or tuned with at least one of historical operational data or environmental data and are updated during operation with new operational or environmental data, wherein the new operational data is obtained via nominal operation, via active learning, or via one or more design of experiments.

14. A system for predicting and avoiding component faults that result in a shutdown of a wind turbine, the system comprising:
   a controller comprising:

   a predictive model comprising a machine-learned model configured with instructions to receive operational data of the wind turbine and estimate current behavior or predict future behavior of the wind turbine using the operational data;
   a fault detection model configured with instructions to determine whether the current or future behavior of the wind turbine indicates an upcoming short-term fault or an upcoming long-term fault occurring in the wind turbine, the upcoming short-term fault occurring within a first time frame, the upcoming long-term fault occurring within a second time frame, the second time frame being longer than the first time frame;
   a prescriptive action model comprising instructions to determine a corrective action for the wind turbine based on whether the future behavior of the wind turbine indicates the upcoming short-term fault or the upcoming long-term fault occurring in the wind turbine; and
   at least one processor configured with instructions to implement the corrective action for the wind turbine during operation thereof to prevent the upcoming short-term fault or the upcoming long-term fault from occurring in the wind turbine.

15. The system of claim 14, wherein the machine-learned model of the predictive model is a supervised-learning model.

FIG. 1

200

TARGET DEVICE ─202

WIND TURBINE
CONTROLLER

PROCESSOR ─204
─208

MEMORY DEVICE

SENSORS ─206

─210

FIG. 2

FIG. 3

300

RECEIVE, VIA A CONTROLLER, OPERATIONAL DATA OF THE WIND TURBINE ⟶302

PREDICT, VIA A PREDICTIVE MODEL OF THE CONTROLLER, FUTURE BEHAVIOR OF THE WIND TURBINE USING THE OPERATIONAL DATA ⟶304

DETERMINE, VIA THE CONTROLLER, WHETHER THE FUTURE BEHAVIOR OF THE WIND TURBINE INDICATES AN UPCOMING SHORT-TERM FAULT OR AN UPCOMING LONG-TERM FAULT OCCURRING IN THE WIND TURBINE, THE UPCOMING SHORT-TERM FAULT OCCURRING WITHIN A FIRST TIME FRAME, THE UPCOMING LONG-TERM FAULT OCCURRING WITHIN A SECOND TIME FRAME, THE SECOND TIME FRAME BEING LONGER THAN THE FIRST TIME FRAME ⟶306

DETERMINE, VIA A PRESCRIPTIVE ACTION MODEL OF THE CONTROLLER, A CORRECTIVE ACTION FOR THE WIND TURBINE BASED ON WHETHER THE FUTURE BEHAVIOR OF THE WIND TURBINE INDICATES THE UPCOMING SHORT-TERM FAULT OR THE UPCOMING LONG-TERM FAULT OCCURRING IN THE WIND TURBINE ⟶308

IMPLEMENT, VIA THE CONTROLLER, THE CORRECTIVE ACTION FOR THE WIND TURBINE DURING OPERATION THEREOF TO PREVENT THE UPCOMING SHORT-TERM FAULT OR THE UPCOMING LONG-TERM FAULT FROM OCCURRING IN THE WIND TURBINE ⟶310

FIG. 4

FIG. 5

EP 4 170 157 A1

| 430 | 432 | 434 | 436 | 438 |
|---|---|---|---|---|
| GET HISTORICAL DATA FROM TURBINES | VARIABLE SELECTION AND DATA IMPUTATION | PREDICTIVE MODEL<br>1) A MODEL TO PREDICT EXPECTED BEHAVIOR<br>2) MODEL PERSONALIZED FOR EACH TURBINES | FAULT DETECTION MODEL<br>1) RESIDUAL BETWEEN EXPECTED AND ACTUAL MEASUREMENT<br>2) A PROBABILISTIC ANOMALY DETECTION MODEL TO FIND ANOMALOUS BEHAVIOR IN LOCAL TEMPORAL NEIGHBORHOOD | METRIC COMPUTATION OPTIMAL PARAMETERS FOR LONG TERM AND SHORT TERM FAULTS TUNED USING CROSS-VALIDATION |

OFFLINE

| 440 | 442 | 444 | 446 | 448 | 450 |
|---|---|---|---|---|---|
| DATA FROM THE CLIENT FOR WIND TURBINE 100 | COMPETENCY QUANTIFICATION | DATA IMPUTATION | RESIDUAL COMPUTATION USING STORED PREDICTIVE MODEL FOR WIND TURBINE 100 | ANOMALY DETECTION TO RAISE ALARM USING (ONLINE VERSION) OF FAULT DETECTION MODEL | STATE VECTOR NECESSARY FOR NEXT TIME STAMP |

ONLINE

FIG. 6

FIG. 7

EP 4 170 157 A1

FIG. 8

FIG. 9

Europäisches
Patentamt

European
Patent Office

Office européen
des brevets

# EUROPEAN SEARCH REPORT

Application Number

EP 22 17 7253

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/141392 A1 (DAMGAARD CHRIS [DK] ET AL) 7 May 2020 (2020-05-07) * paragraphs [0001], [0009], [0012], [0016], [0021], [0025], [0035], [0044], [0076], [0098] * | 1-15 | INV. F03D7/04 F03D17/00 |
| X | US 2010/332272 A1 (ONG JIUN KEAT [SG] ET AL) 30 December 2010 (2010-12-30) * figure 6 * * paragraphs [0078], [0090] - [0092] * | 1-15 | |
| X | WO 2019/049406 A1 (HITACHI LTD [JP]) 14 March 2019 (2019-03-14) * figure 3 * * the whole document * | 1-15 | |

TECHNICAL FIELDS SEARCHED (IPC)

F03D

The present search report has been drawn up for all claims

| Place of search | Date of completion of the search | Examiner |
|---|---|---|
| The Hague | 16 November 2022 | Altmann, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 22 17 7253**

This annex lists the patent family members relating to the patent documents cited in the above-mentioned European search report.
The members are as contained in the European Patent Office EDP file on
The European Patent Office is in no way liable for these particulars which are merely given for the purpose of information.

**16−11−2022**

| Patent document cited in search report | Publication date | Patent family member(s) | | Publication date |
|---|---|---|---|---|
| US 2020141392 A1 | 07−05−2020 | EP | 3638900 A1 | 22−04−2020 |
| | | US | 2020141392 A1 | 07−05−2020 |
| | | WO | 2018228648 A1 | 20−12−2018 |
| US 2010332272 A1 | 30−12−2010 | CN | 101929432 A | 29−12−2010 |
| | | EP | 2267305 A2 | 29−12−2010 |
| | | ES | 2562253 T3 | 03−03−2016 |
| | | US | 2010332272 A1 | 30−12−2010 |
| WO 2019049406 A1 | 14−03−2019 | JP | 6879873 B2 | 02−06−2021 |
| | | JP | 2019049419 A | 28−03−2019 |
| | | TW | 201912930 A | 01−04−2019 |
| | | WO | 2019049406 A1 | 14−03−2019 |

EPO FORM P0459

For more details about this annex : see Official Journal of the European Patent Office, No. 12/82